(19) Europäisches Patentamt
European Patent Office
Office européen des brevets

(11) Veröffentlichungsnummer: **0 167 961**
**A2**

(12) **EUROPÄISCHE PATENTANMELDUNG**

(21) Anmeldenummer: **85108156.2**

(22) Anmeldetag: **01.07.85**

(51) Int. Cl.[4]: **C 09 B 47/32**
D 06 P 1/42, D 06 P 3/32
D 21 H 3/80

(30) Priorität: **07.07.84 DE 3425132**

(43) Veröffentlichungstag der Anmeldung:
**15.01.86 Patentblatt 86/3**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Colberg, Horst, Dr.**
**Tilsiter Strasse 9**
**D-6707 Schifferstadt(DE)**

(72) Erfinder: **Mayer, Udo, Dr.**
**Max-Slevogt-Strasse 27**
**D-6710 Frankenthal(DE)**

(54) **Kationische Phthalocyaninfarbstoffe.**

(57) Die Erfindung betrifft Verbindungen, die in Form der freien Säuren der allgemeinen Formel I

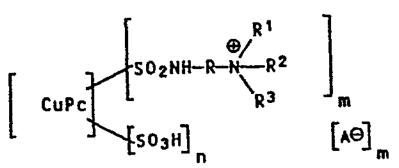

I

entsprechen, in der

m + n 2 bis 4,

$A^{\ominus}$ ein Anion,

R ein Alkylenrest, der durch –O–, Piperazinyliden oder $-\underset{R^4}{\underset{|}{N}}-$ unterbrochen sein kann und

$R^1$, $R^2$ und $R^3$ gegebenenfalls substituiertes Alkyl, Allyl oder Cycloalkyl oder einer der Reste auch Benzyl sind, wobei die Summe der C-Atome von $R^1$, $R^2$ und $R^3$ mindestens 8 beträgt und

$R^4$ Wasserstoff, Methyl, Ethyl, Propyl oder Allyl ist.

Die erfindungsgemäßen Verbindungen eignen sich insbesondere zum Färben von Papier.

EP 0 167 961 A2

Kationische Phthalocyaninfarbstoffe

Die Erfindung betrifft Verbindungen, die in Form der freien Säuren der allgemeinen Formel I

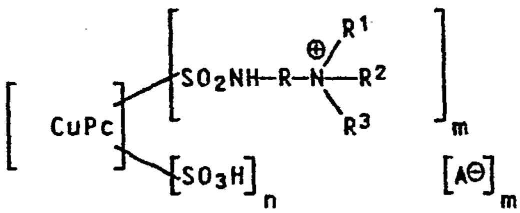

I

entsprechen, in der

m + n 2 bis 4,

$A^\ominus$ ein Anion,

R ein Alkylenrest, der durch -O-, Piperazinyliden oder 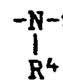 unterbrochen sein kann und

$R^1$, $R^2$ und $R^3$ gegebenenfalls substituiertes Alkyl, Allyl oder Cycloalkyl oder einer der Reste auch Benzyl sind, wobei die Summe der C-Atome von $R^1$, $R^2$ und $R^3$ mindestens 8 beträgt und

$R^4$ Wasserstoff, Methyl, Ethyl, Propyl oder Allyl ist.

Alkylenreste R sind z.B.:

$C_2H_4$, $C_3H_6$, 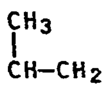, 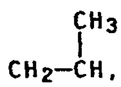, $C_4H_8$, 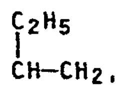, $C_6H_{12}$, 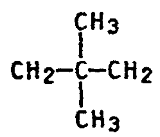,

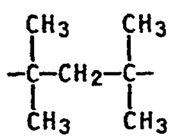, $C_2H_4OC_2H_4$, $C_3H_6OC_3H_6$, $C_3H_6OC_2H_4OC_3H_6$, $C_3H_6OC_4H_8OC_3H_6$,

$C_3H_6OC_2H_4OC_2H_4OC_3H_6$, $C_2H_4NHC_2H_4$, $C_2H_4NHC_3H_6$, $C_3H_6NHC_3H_6$,

$C_3H_6NHC_2H_4NHC_3H_6$, $C_3H_6NHC_6H_{12}NHC_3H_6$, 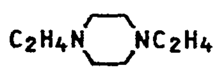 oder

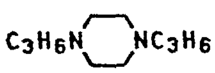.

und vorzugsweise $C_2H_4$ oder insbesondere $C_3H_6$.

Für $R^1$, $R^2$ und $R^3$ kommen z.B. Alkylreste mit 1 bis 18 C-Atomen in Betracht, die noch durch Sauerstoff unterbrochen und durch Hydroxy oder $C_1$- bis $C_8$-Alkoxy substituiert sein können.

Bg

Einzelne Reste sind beispielsweise:

$CH_3$, $C_2H_5$, $C_3H_7$, $C_4H_9$, $C_5H_{11}$, $C_6H_{13}$, $C_8H_{17}$, $CH_2CH(C_2H_5)C_4H_9$, $C_{10}H_{21}$, $C_{12}H_{25}$, $C_{13}H_{27}$, $C_{16}H_{31}$, $C_{18}H_{35}$, $C_2H_4OH$, $C_3H_6OH$, $C_2H_4OCH_3$, $C_2H_4OC_2H_5$, $C_2H_4OC_3H_7$, $C_2H_4OC_4H_9$, $C_2H_4OC_8H_{17}$, $C_3H_6OCH_3$, $C_3H_6OC_4H_9$, 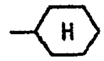 , 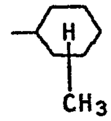 , 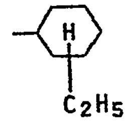 ,

$[C_2H_4O]_2H$, $[C_2H_4O]_3H$, $[C_2H_4O]_4H$, $[CH(CH_3)-CH_2O]_2H$, $[CH(CH_3)-CH_2O]_3H$, $[CH_2-CH(CH_3)O]_2H$ oder $[CH_2CH(CH_3)O]_3H$.

Bei Resten, die isomer auftreten können, umfaßt die obige Formelschreibweise sowohl die n- als auch die i-Reste.

Einer der Reste $R^1$, $R^2$ oder $R^3$ hat vorzugsweise mehr als 5 C-Atome, insbesondere sind Cyclohexyl, Methylcyclohexyl, 2-Ethylhex-1-yl oder Tridecyl bevorzugt.

m hat vorzugsweise einen Wert zwischen 2 und 3 und n zwischen 0,1 und 1 (statistische Mittelwerte).

Anionen $A^{\ominus}$ sind z.B.: Chlorid, Bromid, Hydrogensulfat, Sulfat, Nitrat, Phosphat, Hydrogenphosphat, Dihydrogenphosphat, Carbonat, Hydrogencarbonat, Tetrachlorozinkat, Aminosulfonat, Methylsulfonat, Methylsulfat, Ethylsulfat, Formiat, Acetat, Hydroxyacetat, Aminoacetat, Methoxyacetat, Propionat, Lactat, Maleinat, Malonat, Citrat, Benzoat, Phthalat, Benzolsulfonat, Toluolsulfonat, Oleat oder Dodecylbenzolsulfonat.

Zur Herstellung der Verbindungen der Formel I kann man in Verbindungen der Formel II

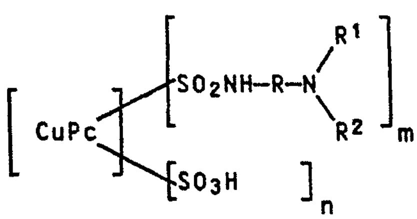

II

nach an sich bekannten Methoden den Rest $R^3$ einführen. Repräsentative Herstellungsmethoden können den Beispielen entnommen werden, in denen sich Angaben über Teile und Prozente, sofern nicht anders vermerkt, auf das Gewicht beziehen.

Die Verbindungen der Formel I eignen sich zum Färben von sauer modifizierten Fasern wie Polyacrylnitril oder Polyestern, Leder und insbesondere Papier. Auch läßt sich insbesondere Papier mit Druckfarben bedrucken, die wäßrige Lösungen von Säureadditionssalzen von I enthalten. In Form der Basen oder Salze mit längerkettigen Carbon- oder Sulfonsäuren wie Ölsäure oder Dodecylbenzolsulfosäure kommen sie auch z. B. für Kugelschreiberpasten als Solventfarbstoffe oder für nicht wäßrige Druckfarben in Betracht. Mit entsprechenden Anionen sind die Farbstoffe als Säureadditionssalze auch leicht in Wasser und organischen Lösungsmitteln löslich, so daß sie sich zur Herstellung von flüssigen Konzentraten eignen.

Von besonderer Bedeutung sind Verbindungen der Formel

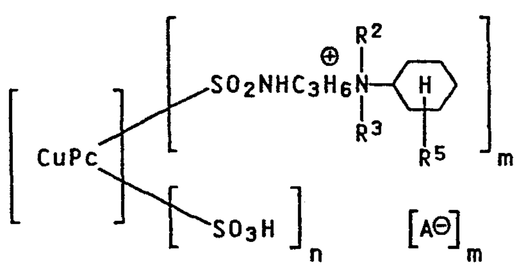

in der

$R^5$ Wasserstoff, Methyl oder Ethyl und

$R^2$ und $R^3$ Methyl, Ethyl, ß-Hydroxyethyl, ß-Hydroxypropyl oder Benzyl sind und A⊖, m und n die angegebene Bedeutung haben.

Beispiel 1

In 17 Teilen Wasser werden 4,46 Teile Farbstoffbase, die aus Kupferphthalocyanin durch Sulfochlorierung nach bekannten Methoden und Umsetzung mit N-Cyclohexyl-1,3-propylendiamin hergestellt werden kann und die ungefähr 2,5 Sulfamidgruppen und 0,5 Sulfonsäuregruppen pro Molekül enthält, mit 0,79 Teilen Magnesiumoxid verrührt. Bei 0 °C tropft man 7,2 Teile Dimethylsulfat zu und rührt zwei Stunden nach, wobei die Temperatur auf 15 °C steigen darf. Wiederum bei 0 °C tropft man 6,8 Teile 25 proz. wäßriges Ammoniak ein, rührt 2 Stunden nach und erhitzt vorsichtig auf 70 °C. Man läßt abkühlen, saugt ab und wäscht mit verdünntem Ammoniakwasser. Man erhält nach der Trocknung 7,1 Teile fremdelektrolythaltigen Farbstoff. Er läßt sich mit Wasser und Eisessig unter Zusatz von organischen Lösungsmitteln wie beispielsweise Methylglykol oder Thiodiglykol zu stabilen Flüssigeinstellungen auflösen oder mit festen Säuren wie beispielsweise Amidosulfonsäure zu einem Pulver vermahlen. In essigsaurer Lösung entspricht die Verbindung der Formel

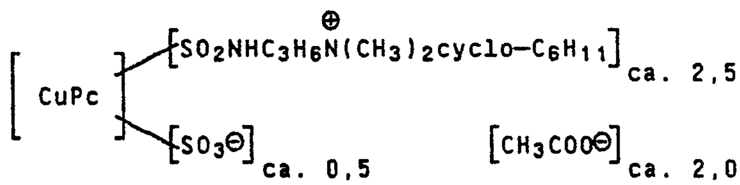

Analog dem beschriebenen Verfahren lassen sich weitere Farbstoffe herstellen, die in Farbton und Affinität weitgehend dem Beispiel 1 entsprechen.

0167961

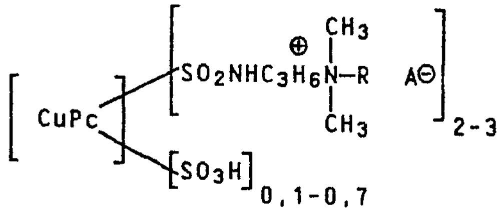

| Beispiel | R |
|---|---|
| 2 | 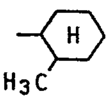 |
| 3 | 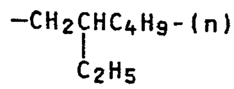 |
| 4 | 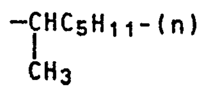 |
| 5 | 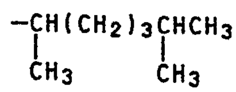 |
| 6 | $-C_{13}H_{27}$ |
| 7 | 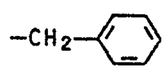 |
| 8 | $-C_{18}H_{37}$-(n) |
| 9 | $-(CH_2)_8CH=CH(CH_2)_7CH_3$ |
| 10 | 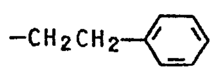 |

Beispiel 11

In 20 Teilen Chloroform werden 4,5 Teile Farbstoffbase, die aus Kupferphthalocyanin durch Sulfochlorierung nach bekannten Methoden und Umsetzung mit N-Cyclohexyl-N-methyl-1,3-propylendiamin hergestellt werden kann und etwa 2,5 Sulfamidgruppen und etwa 0,5 Sulfonsäuregruppen pro Molekül enthält sowie 0,4 Teile Magnesiumoxid suspendiert und bei 50 °C mit 3,6 Teilen Dimethylsulfat versetzt. Man kocht drei Stunden am Rückfluß, kühlt ab, säuert mit konz. Salzsäure an, destilliert das Chloroform ab und fällt durch Zugabe von Zinkchlorid. Es werden nach der Trocknung 5 Teile eines fremdelektrolythaltigen Farbstoffpulvers gewonnen. Die Formel entspricht der des Produktes von Beispiel 1. $(CH_3COO^{\ominus})_{ca.2,0}$ ist dabei durch $(ZnCl_4^{2\ominus})_{ca.1,0}$ zu ersetzen. Die in Beispiel 2-10 beschriebenen Farbstoffe lassen sich ebenfalls nach diesem Verfahren herstellen.

Beispiel 12

118,5 Teile Farbstoffbase, die aus Kupferphthalocyanin durch Sulfochlorierung nach bekannten Methoden und Umsetzung mit N-Cyclohexyl-1,3-propylendiamin hergestellt werden kann und etwa 2,5 Sulfamidgruppen und etwa 0,5 Sulfonsäuregruppen pro Molekül enthält, werden in Wasser aufgerührt unter Zusatz von 0,2 Teilen eines Natriumsalzes eines Sulfobernsteinsäureesters. Man preßt nach und nach 100 g Ethylenoxid auf und hält insgesamt 6 Stunden bei 80 °C. Nach dem Abkühlen wird abgesaugt, und der Rückstand bei 40 °C getrocknet. Man erhält 130 Teile eines Farbstoffes der Formel

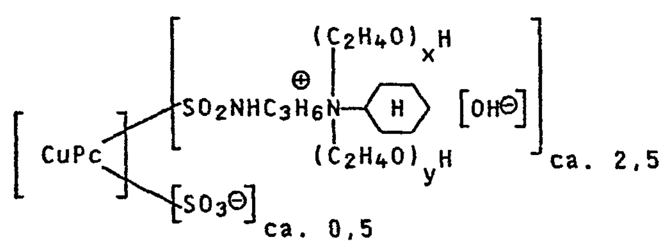

$x, y \geq 1$

Er enthält 3,8 % Cu.

Statt des beschriebenen Vorproduktes können auch die Vorprodukte der Beispiele 2-10 zur Synthese der analogen oxethylierten Farbstoffe eingesetzt werden. Statt Ethylenoxid läßt sich in gleicher Weise auch Propylenoxid verwenden, wobei Farbstoffe erhalten werden, deren Formel sich aus den Formeln der vorstehend in diesem Beispiel beschriebenen Farbstoffe durch Ersatz von $-C_2H_4-$ durch $-CH(CH_3)-CH_2-$ ableitet

Beispiel 13

Einer Suspension von 50 Teilen gebleichtem Sulfatzellstoff von ca. 30° SR in 2000 Teilen Wasser bei pH 7 werden 2 Teile einer 10 %igen essigsauren Lösung des Farbstoffs aus Beispiel 1 zugegeben. Das Gemisch wird 15 Minuten bei 20 bis 25 °C gerührt und dann mit Wasser auf 0,2 % Feststoffgehalt verdünnt. Mit dieser Suspension werden auf einem Laborblattbildner Papierblätter hergestellt und die Blätter 5 Minuten bei 100 °C getrocknet. Man erhält blau gefärbte Blätter. Das Abwasser ist farblos, die Ausblutechtheit gegen Wasser hervorragend. Anorganische Anionen wie Chlorid, Sulfat, Phosphat oder Carbonat im Färbewasser bis hin zu hohen Härtegraden mindern die Farbstärke nicht. Die reduktive Bleichbarkeit mit Hydrosulfit ist gut. Verwendung der Farbstoffe aus Beispiel 2-10 und 12 erbringt ähnlich gute Färbeergebnisse.

Beispiel 14

In eine gerührte Suspension aus 100 Teilen eines Gemisches von 70 % gebleichtem Kiefernsulfatzellstoff und 30 % gebleichtem Birkensulfatzellstoff mit ca. 30° SR im Gesamtstoff in 2000 Teilen Wasser werden 1,0 Teile des Vermahlungsproduktes aus 90 % Farbstoff nach Beispiel 1 und 10 % Amidosulfonsäure eingestreut und 10 Minuten verrührt. Nach Verdünnung mit Wasser auf 0,2 % Feststoffgehalt werden auf einem Laborblattbildner Papierblätter hergestellt und die Blätter 5 Minuten bei 100 °C getrocknet. Man erhält gleichmäßig blau gefärbte Blätter mit hervorragender Ausblutechtheit gegen Wasser. Verwendung von Vermahlungsprodukten der Farbstoffe aus Beispiel 2-10 und 12 mit Amidosulfonsäure erbringt ähnlich gute Färbeergebnisse.

Beispiel 15

Eine saugfähige Papierbahn aus ungeleimtem Papier wird bei 40-50 °C durch eine Farbstofflösung gezogen, die sich zusammensetzt aus 0,5 Teilen Farbstoff aus Beispiel 1, 0,5 Teilen Stärke, 3 Teilen Essigsäure und 96 Teilen Wasser. Die überschüssige Farbstofflösung wird zwischen zwei Walzen abgepreßt. Die getrocknete Papierbahn ist blau gefärbt.

Analog können auch die Farbstoffe aus Beispiel 2-10 und 12 verwendet werden.

0167961

## Patentansprüche

1.
Verbindungen, die in Form der freien Säuren der allgemeinen Formel I

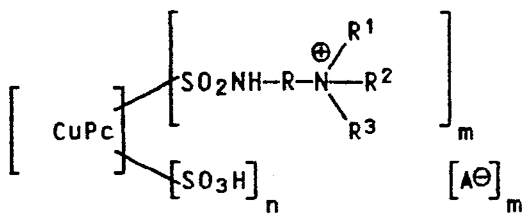

I

entsprechen, in der

m + n 2 bis 4,

$A^{\ominus}$ ein Anion,

R ein Alkylenrest, der durch -O-, Piperazinyliden oder $-\underset{R^4}{\underset{|}{N}}-$ unterbrochen sein kann und

$R^1$, $R^2$ und $R^3$ gegebenenfalls substituiertes Alkyl, Allyl oder Cycloalkyl oder einer der Reste auch Benzyl sind, wobei die Summe der C-Atome von $R^1$, $R^2$ und $R^3$ mindestens 8 beträgt und

$R^4$ Wasserstoff, Methyl, Ethyl, Propyl oder Allyl ist.

2.
Verbindungen gemäß Anspruch 1, der Formel

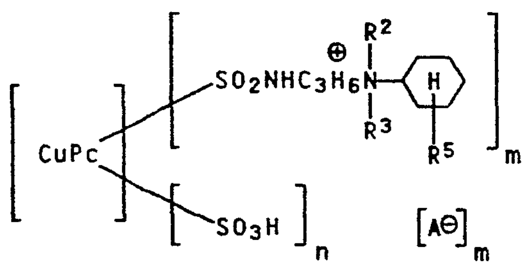

in der

$R^5$ Wasserstoff, Methyl oder Ethyl und

$R^2$ und $R^3$ Methyl, Ethyl, ß-Hydroxyethyl, ß-Hydroxypropyl oder Benzyl sind und $A^{\ominus}$, m und n die angegebene Bedeutung haben.

3.
Verwendung der Verbindungen gemäß Anspruch 1 zum Färben anionisch modifizierter Fasern, von Leder oder Papier.